# EUROPÄISCHE PATENTSCHRIFT

(11) **EP 2 954 572 B1**
(45) Veröffentlichungstag und Bekanntmachung des Hinweises auf die Patenterteilung: **10.04.2019**
(21) Anmeldenummer: 14704282.4
(22) Anmeldetag: 05.02.2014
(51) Int. Cl.: H01M 2/26, H01M 2/34, H01M 10/613, H01M 10/654, H01M 10/6551

(54) **BATTERIE, INSBESONDERE FÜR EIN KRAFTFAHRZEUG**
BATTERY, IN PARTICULAR FOR A MOTOR VEHICLE
BATTERIE NOTAMMENT POUR VÉHICULE AUTOMOBILE

(30) Priorität: 05.02.2013 DE 102013001895
(43) Veröffentlichungstag der Anmeldung: 16.12.2015
(73) Patentinhaber: Marquardt GmbH, 78604 Rietheim-Weilheim (DE)
(72) Erfinder: HAMMA, Andreas, 78532 Tuttlingen (DE); EBNER, Günter, 78073 Oberbaldingen (DE); MAIER, Alexander, 72474 Winterlingen (DE); ZETTO, Mario, 78554 Aldingen (DE)
(74) Vertreter: Otten, Roth, Dobler & Partner mbB Patentanwälte
(86) Internationale Anmeldenummer: PCT/EP2014/000302
(87) Internationale Veröffentlichungsnummer: WO 2014/121922

(56) Entgegenhaltungen:
- WO-A1-2012/029944
- JP-A- 2006 012 604
- JP-A- 2006 156 064
- JP-A- 2006 172 870
- JP-A- 2008 159 351
- US-A1- 2004 126 650
- US-A1- 2010 323 235
- US-B1- 6 325 611

## Beschreibung

Die Erfindung betrifft eine Batterie nach dem Oberbegriff des Patentanspruchs 1.

Derartige Batterien werden als Akkumulatoren in Kraftfahrzeugen, beispielsweise als Starterbatterie, eingesetzt.

In modernen Kraftfahrzeugen und/oder Nutzfahrzeugen werden neue Batteriekonzepte verwendet. Eine solche, aus der JP 2008 159351 A bekannte Batterie weist ein Gehäuse auf, wobei sich im Gehäuse wenigstens eine Batteriezelle zur Speicherung von elektrischer Energie befindet. Des Weiteren befindet sich am Gehäuse wenigstens ein Anschlusspol, insbesondere befinden sich am Gehäuse zwei Anschlusspole, zur elektrischen Verbindung der Batterie mit einem Verbraucher. Im Gehäuse ist ein Verbindungselement zur elektrischen Verbindung des Anschlusspols mit der Batteriezelle angeordnet. Schließlich weist die Batterie ein thermisches Widerstandselement auf.

Der nähere Aufbau von Batteriezellen ist in der JP 2006 012604 A, der US 6 325 611 B1, der US 2010/323235 A1, der US 2004/126650 A1 sowie der WO 2012/029944 A1 beziehungsweise der US 2013/295430 A1 beschrieben. Eine weitere Batterie ist in der JP 2006 172870 A beschrieben.

Bedingt durch die neuen Batteriekonzepte entstehen neue Anforderungen an die Batterie auch hinsichtlich der Sicherheit und des Brandschutzes. Die unterschiedlichen neuen Batteriekonzepte sind hinsichtlich der Betriebstemperatur beschränkt und dürfen außerhalb des definierten Temperaturbereiches nicht betrieben werden. Dies schließt das Laden und/oder das Entladen der Batterien mit ein. Das außer Acht lassen dieser Randbedingungen kann fatale Folgen haben. Entstehende Wärme muss daher abgeführt werden, um einen großen Temperaturbereich abdecken zu können.

Der Erfindung liegt die Aufgabe zugrunde, die Batterie im Hinblick auf die Entwärmung weiter zu entwickeln.

Diese Aufgabe wird bei einer gattungsgemäßen Batterie durch die kennzeichnenden Merkmale des Anspruchs 1 gelöst.

Bei der erfindungsgemäßen Batterie weist das Verbindungselement zwischen dem Anschlusspol und der Batteriezelle das thermische Widerstandselement mit einem erhöhten thermischen Widerstand auf beziehungsweise das thermische Widerstandselement ist zwischen dem Verbindungselement zum Anschlusspol und der Batteriezelle angeordnet, derart dass entstehende und/oder vorhandene Wärme im wesentlichen in Gegenrichtung zur Batteriezelle fließt und/oder am Zufluss zur Batteriezelle im wesentlichen gehindert ist. Der thermische Widerstand lässt sich weiter vergrößern, indem das thermische Widerstandselement mäanderförmig, insbesondere mit mehreren aufeinanderfolgenden Abwinkelungen, ausgestaltet ist. Dadurch ist sichergestellt, dass die Wärme die empfindlichen Batteriezellen nicht beeinträchtigen kann. Vielmehr fließt die entstehende Wärme in Richtung zum Äußeren des Gehäuses und kann dort zuverlässig abgeführt werden. Weitere Ausgestaltungen der Erfindung sind Gegenstand der Unteransprüche.

In einfacher Ausgestaltung kann das Verbindungselement wenigstens eine Abwinkelung, insbesondere in etwa von 90°, als thermisches Widerstandselement aufweisen. Eine solche Abwinkelung stellt einen hohen Widerstand für den Wärmefluss dar und ist dennoch in einfacher Art und Weise sowie kostengünstig herstellbar.

Damit die zum Äußeren des Gehäuses fließende Wärme effizient abgeführt werden kann, steht das Verbindungselement mit einer am Gehäuse befindlichen Wärmesenke in thermischer Verbindung. Die thermische Verbindung ist dabei derart ausgestaltet, dass die Wärme im Wesentlichen zur Wärmesenke fließt. Des Weiteren kann die Wärme dann an der Wärmesenke durch Abstrahlung, Konvektion, erzwungene Konvektion o. dgl. in die Umgebung der Batterie abgeführt werden. Zweckmäßigerweise kann als Wärmesenke ein Kühlkörper, ein Ventilator, eine Heatpipe o. dgl. zur effektiven Wärmeabfuhr dienen.

Zur Abschaltung der Batterie bei einem zu hohen Strom kann ein elektrisches Trennelement zwischen dem Anschlusspol und der Batteriezelle angeordnet sein, womit die Betriebssicherheit für die Batterie weiter erhöht wird. Dabei kann es sich anbieten, dass der Wärmefluss der Wärme, die aufgrund der elektrischen Verlustleistung am Trennelement entsteht, zur Batteriezelle vom thermischen Widerstandselement begrenzt wird. Weiter kann ein Strommesselement zwischen der Batteriezelle und dem Anschlusspol befindlich sein, so dass bei Überschreiten eines Stromgrenzwertes das elektrische Trennelement den Stromfluss unterbricht. In kostengünstiger Art und Weise kann es sich bei dem Trennelement um ein Relais und/oder einen Halbleiter-Leistungsschalter handeln.

Bei Batterien mit hoher Leistung, welche insbesondere in Kraftfahrzeugen Verwendung finden, können zwei oder gegebenenfalls auch mehrere elektrische Trennelemente in Parallelschaltung vorgesehen sein, um die Erwärmung am jeweiligen Trennelement zu begrenzen und/oder um das Trennelement vor Überlastung zu schützen. Weiter kann zur Verbesserung der Wärmeabfuhr das Trennelement mit der Wärmesenke in thermischer Verbindung stehen. Zweckmäßigerweise kann hierzu das Trennelement am Kühlkörper befestigt sein.

Um einen effektiven Wärmeabfluss vom Trennelement in die gewünschte Richtung sicherzustellen, kann das elektrische Verbindungselement vom Anschlusspol zum Trennelement kurz gehalten sein. Zwecks effektiver Abführung der am Trennelement entstehenden Wärme kann es sich insbesondere anbieten, dass das elektrische Verbindungselement von dem einen Anschlusspol zum Trennelement kürzer als das elektrische Verbindungselement von dem anderen Anschlusspol der Batterie zur Batteriezelle ist.

In weiterer zweckmäßiger Ausgestaltung kann das Gehäuse einen Gehäusedeckel umfassen. Es kann sich dann anbieten, dass das Verbindungselement und/oder der Kühlkörper wenigstens teilweise im und/oder am Gehäusedeckel angeordnet sind. Somit dient dann der Gehäusedeckel in kostengünstiger Weise gleichzeitig als Träger für das Verbindungselement und/oder den Kühlkörper. Außerdem gestattet eine solche Anordnung eine kompakte Ausbildung der Batterie.

Für eine besonders bevorzugte Ausgestaltung der erfindungsgemäßen Batterie ist nachfolgendes festzustellen.

Auf die Umgebungstemperaturen für die Batterie hat man keinen Einfluss. Allerdings kann man durch die konstruktive Ausgestaltung gemäß der Erfindung dafür sorgen, dass elektrisch entstehende Verlustleistung in Form von Wärme nur in reduziertem Maße den Weg in die Batterie findet. Durch die erfindungsgemäße Ausgestaltung der Batterie leitet man den größten Teil der elektrisch entstandenen Verlustleistung weg von der Batteriezelle und eliminiert dann diese Wärmeenergie, beispielsweise durch Abstrahlung, Konvektion, erzwungene Konvektion oder Ableitung zu einer großen Wärmesenke.

Das Trennelement, beispielsweise ein Relais und/oder ein Halbleiterschaltkreis, ist technisch bekannt und dient zum Trennen von elektrischen Stromkreisen. Die elektrischen Leiter werden zu den Batteriezellen mäanderförmig ausgeführt. Die Anordnung dieser mäanderförmigen Leiter wird so ausgeführt, dass diese den maximalen thermischen Widerstand verursachen und so die Wärme in die andere Richtung zwingen. Der Leiter vom Trennelement zum Batteriepol ist so ausgeführt, dass die Leiteranbindung kurz ist und an dessen Ende die Wärme effizient abgeführt wird.

Geschaffen ist dadurch ein Batteriekonzept, bei dem eine Abkoppelung der thermischen Verlustleistung im und/oder am Trennelement vom Inneren der Batterie erzielt ist.

Die mit der Erfindung erzielten Vorteile bestehen insbesondere darin, dass die Batterie durch das Trennelement thermisch nicht zusätzlich erwärmt wird. Die Batterie funktioniert auch nahe der zulässigen Grenztemperatur in zuverlässiger Weise. Schließlich erhöht sich die Lebensdauer der Batterie, weil die thermische Belastung nicht wie bisher so schnell anfällt und/oder so extrem ausfällt.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: eine Batterie in schematischer Art,
- Fig. 2: den Gehäusedeckel der Batterie in perspektivischer Ansicht,
- Fig. 3: den Gehäusedeckel von der Unterseite gemäß Richtung III in Fig. 2,
- Fig. 4: den Gehäusedeckel in Seitenansicht gemäß Richtung IV in Fig. 2 und
- Fig. 5: einen vergrößerten Detailausschnitt aus Fig. 3.

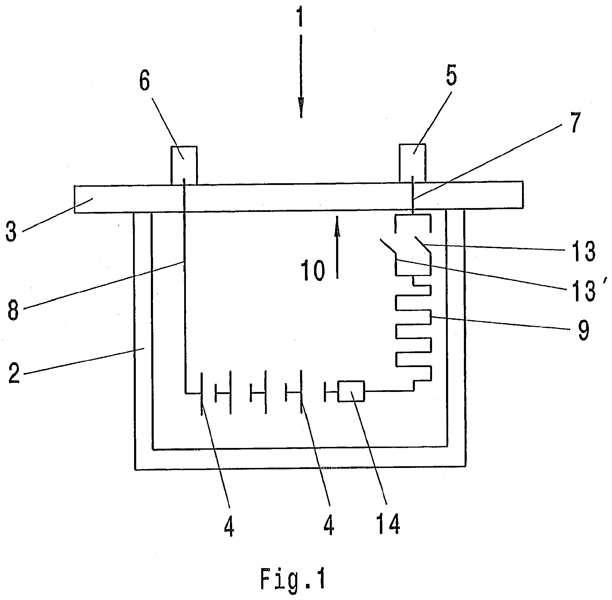

In Fig. 1 ist eine als Akkumulator dienende Batterie 1 für ein Kraftfahrzeug in schematischer Art zu sehen. Die Batterie 1 besitzt ein Gehäuse 2, das mit einem Gehäusedeckel 3 an der Oberseite abgeschlossen ist. Im Gehäuse 2 befindet sich wenigstens eine Batteriezelle 4 zur Speicherung von elektrischer Energie. Vorliegend befinden sich eine oder mehrere Batteriezellen 4 im Gehäuse 2, wie in Fig. 1 angedeutet ist, wobei die Batteriezellen 4 beliebig im Gehäuse 2 angeordnet sein können. Am Gehäuse 2 befindet sich wenigstens ein Anschlusspol 5, 6 zur elektrischen Verbindung der Batterie 1 mit einem Verbraucher im Kraftfahrzeug. Vorliegend besitzt die Batterie 1 zwei Anschlusspole 5, 6, die am Gehäusedeckel 3 angeordnet sind. Desweiteren befindet sich im Gehäuse 2 ein Verbindungselement 7, 8 zur elektrischen Verbindung des Anschlusspols 5, 6 mit der Batteriezelle 4. Das Verbindungselement 7 weist zwischen dem einen Anschlusspol 5 und der Batteriezelle 4 ein thermisches Widerstandselement 9 mit einem erhöhten thermischen Widerstand auf. Dabei kann das thermische Widerstandselement 9 integraler Bestandteil des Verbindungselements 7 oder auch ein separates Teil sein, das zwischen dem Verbindungselement 7 sowie der Batteriezelle 4 angeordnet ist. Das thermische Widerstandselement 9 bewirkt, dass entstehende und/oder vorhandene Wärme im wesentlichen in Gegenrichtung zur Batteriezelle 4 gemäß Pfeil 10 fließt und/oder am Zufluss zur Batteriezelle 4 im wesentlichen gehindert ist.

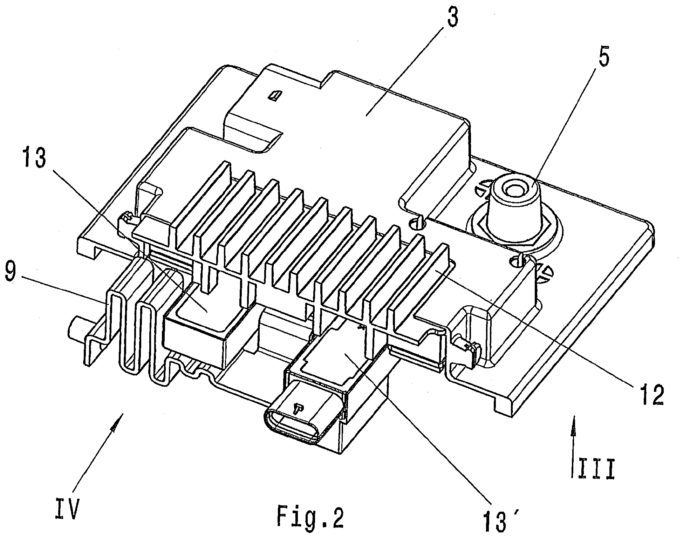

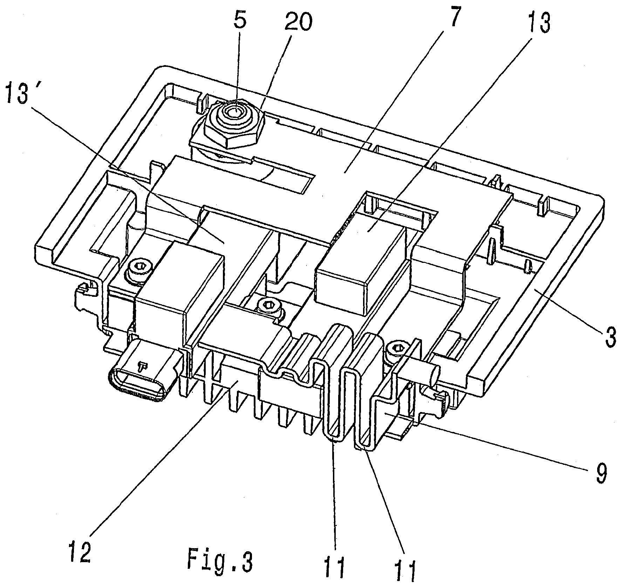

Wie näher anhand von Fig. 3 zu sehen ist, weist das Verbindungselement 7 mehrere aufeinanderfolgende Abwinkelungen 11, die vorliegend in etwa 90° betragen als thermisches Widerstandselement 9 auf. Es bietet sich zwecks weiterer Erhöhung des thermischen Widerstands an, mehrere Abwinkelungen 11 aneinander zu fügen, so dass das thermische Widerstandselement 9 mäanderförmig ausgestaltet ist. Wie bereits erwähnt kann es sich bei dem thermischen Widerstandelement 9 auch um ein die elektrische Verbindung zu den Batteriezellen 4 herstellendes, im Hinblick auf das Verbindungselement 7 separates Teil handeln, wobei das thermische Widerstandselement 9 jedoch mit dem Verbindungselement 7 in elektrisch leitfähiger Verbindung steht. Das Verbindungselement 7 steht weiterhin mit einer an der Außenseite am Gehäuse 2, und zwar genauer am Gehäusedeckel 3, befindlichen Wärmesenke 12 in thermischer Verbindung, welche in Fig. 2 gezeigt ist, und besitzt in Richtung zur Wärmesenke 12 eine gute Wärmeleitfähigkeit. Dadurch ist eine Vorzugsrichtung für die Wärme geschaffen, so dass die Wärme im wesentlichen zur Wärmesenke 12 fließt, um dann an der Wärmesenke 12 durch Abstrahlung, Konvektion, erzwungene Konvektion o. dgl. abgeführt zu werden. Bei der zur Abführung der in Richtung 10 fließenden Wärme dienenden Wärmesenke 12 handelt es sich um einen Kühlkörper. Selbstverständlich kann als Wärmesenke 12 auch ein Ventilator, eine Heatpipe o. dgl. Verwendung finden.

Im Überlastungsfalle kann die Batterie 1 abgeschaltet werden. Hierfür ist ein elektrisches Trennelement 13, bei dem es sich vorliegend um ein Relais und/oder um einen Halbleiter-Leistungsschalter handelt, zwischen dem Anschlusspol 5 und der Batteriezelle 4 befindlich, wie anhand von Fig. 1 zu erkennen ist. Um den im Kraftfahrzeugbetrieb auftretenden hohen Strömen Rechnung zu tragen, sind zwei oder mehrere elektrische Trennelemente 13, 13' in Parallelschaltung vorgesehen. Weiterhin befindet sich ein Strommesselement 14 zwischen der Batteriezelle 4 und dem Anschlusspol 5. Mit Hilfe des Strommesselements 14 wird der im Verbindungselement 7 beziehungsweise im thermischen Widerstandselement 9 fließende elektrische Strom gemessen. Bei Überschreiten eines Grenzwertes für den gemessenen Strom unterbricht dann das elektrische Trennelement 13, 13' den Stromfluss aus Sicherheitsgründen.

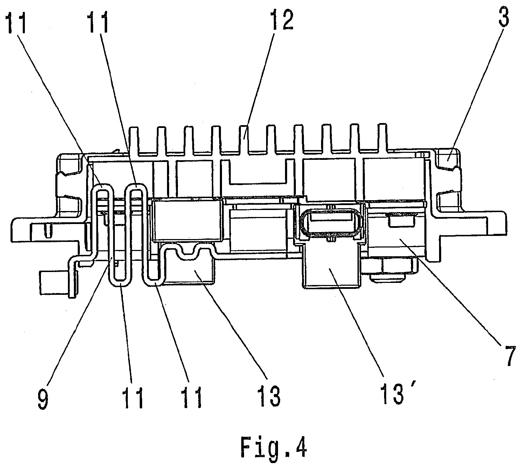

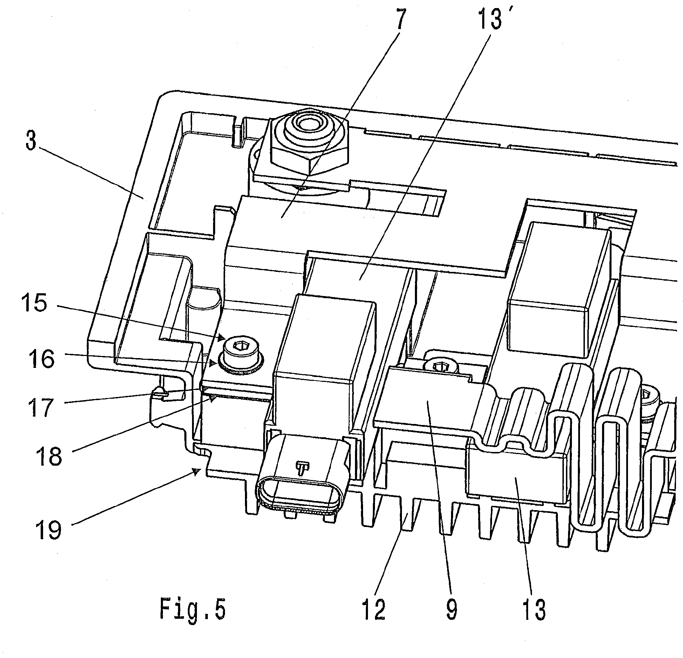

Aufgrund der elektrischen Verlustleistung am Trennelement 13, 13' entsteht dort Wärme. Vom thermischen Widerstandselement 9 wird nunmehr der Wärmefluss dieser Wärme zur Batteriezelle 4 begrenzt, womit eine Schädigung der Batteriezellen 4 verhindert wird. Wie man in Fig. 4 sieht ist das Trennelement 13, 13' am Kühlkörper 12 befestigt. Damit steht das Trennelement 13, 13' mit der Wärmesenke 12 zur Abführung der Wärme in thermischer Verbindung, wie man im Detail anhand von Fig. 5 erkennt. Gemäß Fig. 1 ist zunächst der Anschlusspol 5, dann das elektrische Verbindungselement 7, anschließend das Trennelement 13, 13', danach das thermische Widerstandselement 9, dann gegebenenfalls das Strommesselement 14 und schließlich die Batteriezelle 4 angeordnet. Zwecks weiterer Optimierung des Wärmeflusses in Richtung 10 ist das elektrische Verbindungselement 7 vom Anschlusspol 5 zum Trennelement 13, 13' kurz gehalten. Wie man weiter anhand von Fig. 1 erkennt, ist auch das elektrische Verbindungselement 7 von dem einen Anschlusspol 5 zum Trennelement 13, 13' kürzer als das elektrische Verbindungselement 8 von dem anderen Anschlusspol 6 zur Batteriezelle 4.

Das Gehäuse 2 der Batterie 1 umfasst wie bereits erwähnt einen Gehäusedeckel 3. Das Verbindungselement 7 und/oder der Kühlkörper 12 sind gemäß Fig. 3 wenigstens teilweise im Gehäusedeckel 3 angeordnet. Das Verbindungselement 7 ist dabei im Inneren des Gehäuses 2 mittels einer Mutter 20 am Anschlusspol 5 verschraubt. Desweiteren ist gemäß Fig. 5 das Verbindungselement 7 mittels einer Schraube 15 sowie einer elektrisch isolierenden Kunststoffbuchse / Kunststoffzwischenlage 16 am Kühlköper 12 befestigt. Im Bereich der Schraube 15 befindet sich auch die elektrische Anbindung 17 vom Verbindungselement 7 zum Trennelement 13'. Die elektrische Anbindung 17 ist mittels einer elektrisch nichtleitenden Folie 18 aus Kunststoff gegenüber dem Kühlkörper 12 elektrisch isoliert. Der Kühlkörper 12 ist in den aus Kunststoff bestehenden Gehäusedeckel 3 zur Befestigung eingespritzt, wie an der Stelle 19 gemäß Fig. 5 angedeutet ist.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann die Erfindung nicht nur für Kraftfahrzeugbatterien Verwendung finden sondern auch in Batterielösungen für unterschiedliche sonstige Anwendungen eingesetzt werden.

### Bezugszeichen-Liste:

- 1:: Batterie
- 2:: Gehäuse
- 3:: Gehäusedeckel
- 4:: Batteriezelle
- 5,6:: Anschlusspol
- 7,8:: Verbindungselement
- 9:: thermisches Widerstandselement
- 10:: Pfeil / (Gegen)Richtung (für Wärmefluss)
- 11:: Abwinkelung
- 12:: Wärmesenke / Kühlkörper
- 13,13':: elektrisches Trennelement
- 14:: Strommesselement
- 15:: Schraube
- 16:: Kunststoffbuchse / Kunststoffzwischenlage
- 17:: elektrische Anbindung
- 18:: (elektrisch nichtleitende) Folie
- 19:: Stelle (für in Gehäusedeckel eingespritzten Kühlkörper)
- 20:: Mutter

## Patentansprüche

1. Batterie, insbesondere für ein Kraftfahrzeug, mit einem Gehäuse (2), mit wenigstens einer im Gehäuse (2) befindlichen Batteriezelle (4) zur Speicherung von elektrischer Energie, mit wenigstens einem am Gehäuse (2) befindlichen Anschlusspol (5, 6) zur elektrischen Verbindung der Batterie (1) mit einem Verbraucher, mit einem Verbindungselement (7, 8) zur elektrischen Verbindung des Anschlusspols (5, 6) mit der Batteriezelle (4), und mit einem thermischen Widerstandselement (9), **dadurch gekennzeichnet, dass** das thermische Widerstandselement (9) einen erhöhten thermischen Widerstand aufweist, indem das thermische Widerstandselement (9) mäanderförmig mit mehreren aufeinanderfolgenden Abwinkelungen (11) ausgestaltet ist, dass das Verbindungselement (7) zwischen dem Anschlusspol (5) und der Batteriezelle (4) das thermische Widerstandselement (9) aufweist, derart dass entstehende und/oder vorhandene Wärme im wesentlichen in Gegenrichtung (10) zur Batteriezelle (4) fließt und/oder am Zufluss zur Batteriezelle (4) im wesentlichen gehindert ist, und dass das Verbindungselement (7) mit einer am Gehäuse (2) befindlichen Wärmesenke (12) in thermischer Verbindung steht, derart dass die Wärme im wesentlichen zur Wärmesenke (12) fließt.

2. Batterie nach Anspruch 1, **dadurch gekennzeichnet, dass** die Abwinkelungen (11) jeweils in etwa 90° betragen.

3. Batterie nach Anspruch 1 oder 2, **dadurch gekennzeichnet, dass** die Wärme an der Wärmesenke (12) durch Abstrahlung, Konvektion oder erzwungene Konvektion abgeführt wird.

4. Batterie nach Anspruch 3, **dadurch gekennzeichnet, dass** es sich bei der Wärmesenke (12) um einen Kühlkörper, einen Ventilator oder eine Heatpipe handelt.

5. Batterie nach einem der Ansprüche 1 bis 4, **dadurch gekennzeichnet, dass** ein elektrisches Trennelement (13), insbesondere ein Relais und/oder ein Halbleiter-Leistungsschalter, zwischen dem Anschlusspol (5) und der Batteriezelle (4) befindlich ist, dass vorzugsweise ein Strommesselement (14) zwischen der Batteriezelle (4) und dem Anschlusspol (5) befindlich ist, derart dass bei Überschreiten eines Stromgrenzwertes das elektrische Trennelement (13) den Stromfluss unterbricht, und dass weiter vorzugsweise der Wärmefluss der Wärme aufgrund der elektrischen Verlustleistung am Trennelement (13) zur Batteriezelle (4) vom thermischen Widerstandselement (9) begrenzt wird.

6. Batterie nach einem der Ansprüche 1 bis 5, **dadurch gekennzeichnet, dass** zwei elektrische Trennelemente (13,13') in Parallelschaltung vorgesehen sind, und dass vorzugsweise das Trennelement (13,13') mit der Wärmesenke (12) in thermischer Verbindung steht, insbesondere am Kühlkörper (12) befestigt ist.

7. Batterie nach einem der Ansprüche 5 bis 6, **dadurch gekennzeichnet, dass** das elektrische Verbindungselement (7) vom Anschlusspol (5) zum Trennelement (13) kurz gehalten ist, indem das elektrische Verbindungselement (7) von dem einen Anschlusspol (5) zum Trennelement (13) kürzer als das elektrische Verbindungselement (8) von dem anderen Anschlusspol (6) zur Batteriezelle (4) ist.

8. Batterie nach einem der Ansprüche 1 bis 7, **dadurch gekennzeichnet, dass** das Gehäuse (2) einen Gehäusedeckel (3) umfasst, und dass vorzugsweise das Verbindungselement (7, 8) und/oder der Kühlkörper (12) wenigstens teilweise im und/oder am Gehäusedeckel (3) angeordnet sind.

## Claims

1. A battery, in particular for a motor vehicle, comprising a housing (2), comprising at least one battery cell (4) positioned in the housing (2) and intended for storing electrical energy, comprising at least one terminal (5, 6) positioned on the housing (2) and intended for electrically connecting the battery (1) to a consumer, comprising a connection element (7, 8) for electrically connecting the terminal (5, 6) to the battery cell (4), and comprising a thermal resistance element (9), **characterised in that** the thermal resistance element (9) has a higher thermal resistance since the thermal resistance element (9) is meander-shaped having a plurality of successive bends (11), **in that** the connection element (7) comprises the thermal resistor element (9) between the terminal (5) and the battery cell (4) in such a way that any heat occurring and/or present flows in substantially the opposite direction (10) to the battery cell (4) and/or is substantially blocked at the inflow to the battery cell (4), and **in that** the connection element (7) is thermally connected to a heat sink (12) positioned on the housing (2), in such a way that the heat flows substantially towards the heat sink (12).

2. The battery according to claim 1, **characterised in that** each bend (11) is approximately 90°.

3. The battery according to either claim 1 or claim 2, **characterised in that** the heat is dissipated at the heat sink (12) by radiation, convection or forced convection.

4. The battery according to claim 3, **characterised in that** the heat sink (12) is a cooling element, a fan or a heat pipe.

5. The battery according to any of claims 1 to 4, **characterised in that** an electrical separative element (13), in particular a relay and/or a semiconductor circuit breaker, is positioned between the terminal (5) and the battery cell (4), **in that** a current measurement element (14) is preferably positioned between the battery cell (4) and the terminal (5) in such a way that the electrical separative element (13) breaks the flow of current when a current threshold is exceeded, and **in that** the heat flow of the heat, which is caused by the electrical power loss at the separative element (13), towards the battery cell (4), is more preferably limited by the thermal resistance element (9).

6. The battery according to any of claims 1 to 5, **characterised in that** two electrical separative elements (13, 13') are provided in parallel, and **in that** the isolation element (13, 13') is preferably thermally connected to the heat sink (12), in particular to the cooling element (12).

7. The battery according to either of claims 5 or 6, **characterised in that** the electrical connection element (7) from the terminal (5) to the separative element (13) is kept short by the electrical connection element (7) from one terminal (5) to the separative element (13) being shorter than the electrical connection element (8) from the other terminal (6) to the battery cell (4).

8. The battery according to any of claims 1 to 7, **characterised in that** the housing (2) comprises a housing lid (3), and **in that** the connection element (7, 8) and/or the cooling element (12) is preferably arranged, at least in part, in and/or on the housing lid (3).

## Revendications

1. Batterie, en particulier pour un véhicule automobile, comprenant un boîtier (2), comprenant au moins une cellule (4) de batterie se trouvant dans le boîtier (2), destinée à stocker l'énergie électrique, comprenant au moins une borne de connexion (5, 6) se trouvant sur le boîtier (2) destinée à raccorder électriquement la batterie (1) à un consommateur, comprenant un élément de raccordement (7, 8) destiné à raccorder électriquement la borne de connexion (5, 6) à la cellule (4) de batterie, et comprenant un élément de résistance thermique (9), **caractérisée en ce que** l'élément de résistance thermique (9) présente une résistante thermique élevée, du fait que l'élément de résistance thermique (9) est conçu sous la forme de méandres ayant plusieurs coudes successifs (11) ; **en ce que** l'élément de raccordement (7) présente entre la borne de connexion (5) et la cellule (4) de batterie l'élément de résistance thermique (9) de sorte que la chaleur présente et/ou produite circule sensiblement dans la direction opposée (10) à la cellule (4) de batterie et/ou qu'elle soit empêchée sensiblement à l'entrée de la cellule (4) de batterie, et **en ce que** l'élément de raccordement (7) soit en liaison thermique avec un dissipateur thermique (12) se trouvant sur le boîtier (2) de sorte que la chaleur circule sensiblement vers le puits thermique (12).

2. Batterie selon la revendication 1, **caractérisée en ce que** les coudes (11) sont chacun d'environ 90°.

3. Batterie selon la revendication 1 ou 2, **caractérisée en ce que** la chaleur sur le dissipateur thermique (12) est sortie par radiation, convection ou convection forcée.

4. Batterie selon la revendication 3, **caractérisée en ce que** le puits thermique (12) est un corps de refroidissement, un ventilateur ou un caloduc.

5. Batterie selon l'une quelconque des revendications 1 à 4, **caractérisée en ce qu'**un élément de séparation (13) électrique, en particulier un relais et/ou un disjoncteur à semiconducteur, se trouve entre la borne de connexion (5) et la cellule (4) de batterie, **en ce que** de préférence un élément de mesure de courant (14) se trouve entre la cellule (4) de batterie et la borne de connexion (5) de sorte qu'en cas de dépassement au-dessus d'une valeur limite de courant l'élément de séparation (13) électrique coupe l'écoulement de courant et que de préférence encore, l'écoulement de chaleur en raison de la dissipation d'énergie électrique sur l'élément de séparation (13) vers la cellule (4) de batterie est limité par l'élément de résistance thermique (9).

6. Batterie selon l'une quelconque des revendications 1 à 5, **caractérisée en ce que** deux éléments de séparation (13, 13') électriques sont montés en parallèle, et **en ce que** de préférence l'élément de séparation (13, 13') est en relation thermique avec le dissipateur thermique (12), en particulier est fixé au corps de refroidissement (12).

7. Batterie selon l'une quelconque des revendications 5 à 6, **caractérisée en ce que** l'élément de raccordement (7) électrique est maintenu court entre la borne de connexion (5) et l'élément de séparation (13) du fait que l'élément de raccordement (7) électrique à partir d'une des bornes de connexion (5) vers l'élément de séparation (13) est plus court que l'élément de raccordement (8) électrique entre l'autre borne de connexion (6) et la cellule (4) de batterie.

8. Batterie selon l'une quelconque des revendications 1 à 7, **caractérisée en ce que** le boîtier (2) comprend un couvercle (3) de boîtier et **en ce que** de préférence l'élément de raccordement (7, 8) et/ou le corps de refroidissement (12) sont disposés au moins en partie dans le couvercle (3) de boîtier et/ou sur celui-ci.
